# EUROPÄISCHE PATENTANMELDUNG

(11) **EP 2 145 924 A1**
(43) Veröffentlichungstag der Anmeldung: **20.01.2010**
(21) Anmeldenummer: 08160713.7
(22) Anmeldetag: 18.07.2008
(51) Int. Cl.: C08L 63/00, C09J 163/00, C08G 63/668, C08F 8/14

(54) **Auf amphiphilen Block-Copolymer basierende Reaktionsprodukte und deren Verwendung als Schlagzähigkeitsmodifikator**

(71) Anmelder: Sika Technology AG, 6340 Baar (CH)
(72) Erfinder: Kramer, Andreas, 8006, Zürich (CH); Finter, Jürgen, 8037, Zürich (CH)
(74) Vertreter: Sika Patent Attorneys

(57) **Zusammenfassung**

Die vorliegende Erfindung betrifft neue Schlagzähigkeitsmodifikatoren, welche durch Reaktion aus amphiphilen Blockcopolymeren erhalten werden. Diese Schlagzähigkeitsmodifikatoren eignen sich insbesondere für den Einsatz in hitzehärtenden Epoxidharzklebstoffen.

## Beschreibung

### Technisches Gebiet

Die Erfindung betrifft das Gebiet der Schlagzähigkeitsmodifikatoren und das Gebiet der hitzehärtenden Epoxidharzzusammensetzungen.

### Stand der Technik

Schlagzähigkeitsmodifikatoren werden schon seit langem dazu eingesetzt, um die Festigkeit von Klebstoffen bei schlagartiger Krafteinwirkung zu verbessern. Insbesondere Epoxidharzzusammensetzungen weisen generell zwar hohe mechanische Festigkeiten auf, sind jedoch sehr spröde, das heisst, bei einer schlagartigen Krafteinwirkung, wie sie beispielsweise in einem Zusammenstoss von Fahrzeugen eintritt, bricht das gehärtete Epoxidharz und dies führt zu einer Zerstörung des Verbundes.

Es wurden schon seit langem Vorschläge gemacht, die Schlagzähigkeit durch Verwendung von Schlagzähigkeitsmodifikatoren zu erhöhen.

Flüssigkautschuke werden schon seit längerem zur Zähigkeitsmodifizierung eingesetzt. Beispielsweise wurden Flüssigkautschuke auf Basis von Acrylnitril/Butadien-Copolymeren, wie sie beispielsweise unter dem Namen Hypro™(früher Hycar®) erhältlich sind, eingesetzt.

EP 0 338 985 A2 beschreibt schlagzähe Epoxidharzzusammensetzungen, welche neben Flüssigkautschuken auf Basis von Acrylnitril/Butadien-Copolymeren zusätzlich auch Flüssigkautschuke auf Basis von Polyurethanprepolymere aufweisen, welche mit einem Phenol oder einem Lactam terminiert sind.

WO 2005/007766 A1 offenbart Epoxidharzzusammensetzungen, welche ein Reaktionsprodukt eines Isocyanatgruppen-terminierten Prepolymers und eines Blockierungsmittels, welches ausgewählt ist aus der Gruppe Bisphenol, Phenol, Benzylalkohol, Aminophenol oder Benzylamin enthalten. Derartige Epoxidharzzusammensetzungen zeigen jedoch Schwächen in der Tieftemperaturschlagzähigkeit (<0°C) auf.

WO 03/093387 A1 offenbart schlagzähe Epoxidharzzusammensetzungen, welche Addukte von Dicarbonsäuren mit Glycidylethern oder von Bis(aminophenyl)sulfon-Isomeren oder aromatischen Alkoholen mit Glycidylethern enthalten. Diese Zusammensetzungen weisen jedoch ebenfalls Defizite in der Tieftemperaturschlagzähigkeit (<0°C) auf.

Vor kurzem wurde z.B. in WO 2006/052725 A1, WO 2006/052726 A1, WO 2006/052727 A1, WO 2006/052728 A1, WO 2006/052729 A1, WO 2006/052730 A1, WO 2005/097893 A1, vorgeschlagen, amphiphile Blockcopolymere für Epoxidharzzusammensetzungen zu verwenden.

Es hat sich aber gezeigt, dass diese Schlagzähigkeitsmodifikatoren zwar wirken, dass aber diese Erhöhung der Schlagzähigkeit, insbesondere der der Tieftemperaturschlagzähigkeit noch ungenügend ist.

### Darstellung der Erfindung

Aufgabe der vorliegenden Erfindung ist es daher, neue Schlagzähigkeitsmodifikatoren zur Verfügung zu stellen, welche eine Verbesserung der Schlagzähigkeit aufweisen, insbesondere auch bei tiefen Temperaturen.

Überraschenderweise wurde nun gefunden, dass diese Aufgabe durch Schlagzähigkeitsmodifikatoren gemäss Anspruch 1 und 6 gelöst werden kann.

Es wurde gefunden, dass sich diese Schlagzähigkeitsmodifikatoren bestens für den Einsatz in hitzehärtenden Epoxidharzklebstoffen eignen. Insbesondere hat sich gezeigt, dass Kombinationen von unterschiedlichen erfindungsgemässen Schlagzähigkeitsmodifikatoren untereinander und/oder mit anderen Schlagzähigkeitsmodifikatoren besonders vorteilhaft sind. Es hat sich gezeigt, dass durch den Einsatz dieser Schlagzähigkeitsmodifikatoren die Glasumwandlungstemperatur (Tg) der ausgehärteten Matrix nicht oder nicht wesentlich negativ beeinflusst werden. Es lassen sich mit Epoxidharzen problemlos Glasumwandlungstemperaturen von über 100°C zuweilen gar von über 130°C, erreichen. Zudem hat sich gezeigt, dass sich Zusammensetzungen mit höheren Zugfestigkeiten und Zugscherfestigkeiten erreichen lassen.

Weitere Aspekte der vorliegenden Erfindung sind Gegenstand weiterer unabhängiger Ansprüche. Besonders bevorzugte Ausführungsformen sind Gegenstand der abhängigen Ansprüche.

### Wege zur Ausführung der Erfindung

Die vorliegende Erfindung betrifft in einem ersten Aspekt einen Carbonsäuregruppe(n) aufweisenden Schlagzähigkeitsmodifikator, welcher aus der Reaktion eines intramolekularen Anhydrids einer Di- oder Tricarbonsäure mit mindestens einem amphiphilen Blockcopolymer, welches mindestens eine Hydroxylgruppe aufweist, hergestellt wird.

Der Schlagzähigkeitsmodifikator kann eine oder mehrere Carbonsäuregruppe(n) aufweisen.

In der gesamten hier vorliegenden Schrift werden mit der Vorsilbe "Poly" in "Polyepoxid", "Polyol" und "Polyphenol" Moleküle bezeichnet, die formal zwei oder mehr der jeweiligen funktionellen Gruppen enthalten.

Als "Epoxidgruppe" oder "Epoxygruppe" wird im vorliegenden Dokument das Strukturelement 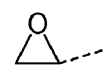 bezeichnet. Als bevorzugte Epoxidgruppe gilt die Glycidylgruppe.

Unter einem "Schlagzähigkeitsmodifikator" wird im vorliegenden Dokument ein Zusatz zu einer Kunststoffmatrix, insbesondere einer Epoxidharzmatrix, verstanden, der bereits bei geringen Zuschlägen, insbesondere von 0.1 - 35 Gew.-%, bevorzugt von 0.5-15 Gew.-%, eine deutliche Zunahme der Zähigkeit der ausgehärteten Matrix bewirkt und somit in der Lage ist, höhere Biege-, Zug-, Schlag- oder Stossbeanspruchung aufzunehmen, bevor die Matrix einreisst oder bricht.

Als "amphiphiles Blockcopolymer" wird im vorliegenden Dokument ein Copolymer verstanden, welches mindestens ein Blocksegment, welches mit Epoxidharz mischbar ist, und mindestens ein Blocksegment, welches mit Epoxidharz nicht mischbar ist, enthält. Insbesondere sind amphiphile Blockcopolymere solche, wie sie offenbart werden in WO 2006/052725 A1, WO 2006/052726 A1, WO 2006/052727 A1, WO 2006/052728 A1, WO 2006/052729 A1, WO 2006/052730 A1, WO 2005/097893 A1, deren Inhalt hiermit durch Bezugnahme eingeschlossen wird.

Beispiele für in Epoxidharz mischbare Blocksegmente sind besonders Polyethylenoxid-, Polypropylenoxid-, Poly(ethylenoxid-co-propylenoxid)- und Poly(ethylenoxid-ran-propylenoxid)-Blöcke sowie deren Mischungen.

Beispiele für in Epoxidharz nicht mischbare Blocksegmente sind einerseits insbesondere Polyether-Blöcke hergestellt aus Alkylenoxiden, welche mindestens 4 C-Atome aufweisen, bevorzugt Butylenoxid, Hexylenoxid und/oder Dodecylenoxid. Insbesondere als derartige Polyether-Blöcke bevorzugt sind Polybutylenoxid-, Polyhexylenoxid- und Polydodecylenoxid-Blöcke sowie deren Mischungen.

Beispiele für in Epoxidharz nicht mischbare Blocksegmente sind andererseits Polyethylen-, Polyethylenpropylen-, Polybutadien-, Polyisopren-, Polydimethylsiloxan- und Polyalkylmethacrylat-Blöcke sowie deren Mischungen.

In einer Ausführungsform ist das mindestens eine Hydroxylgruppe aufweisende amphiphile Blockcopolymer ein Blockcopolymer aus Ethylenoxid und/oder Propylenoxid sowie mindestens einem weiteren Alkylenoxid mit mindestens 4 C-Atomen, bevorzugt aus der Gruppe bestehend aus Butylenoxid, Hexylenoxid und Dodecylenoxid.

In einer weiteren, bevorzugten, Ausführungsform ist das mindestens eine Hydroxylgruppe aufweisende amphiphile Blockcopolymer ausgewählt aus der Gruppe bestehend aus Poly(isopren-block-ethylenoxid)-Blockcopolymere (PI-b-PEO), Poly(ethylenpropylen-b-ethylenoxid)-Blockcopolymere (PEP-b-PEO), Poly(butadien-b-ethylenoxid)-Blockcopolymere (PB-b-PEO), Poly(isopren-b-ethylenoxid-b-isopren)-Blockcopolymere (PI-b-PEO-PI), Poly(isopren-b-ethylenoxid-methylmethacrylat)-Blockcopolymere (PI-b-PEO-b-PMMA) und Poly(ethylenoxid)-b-poly(ethylen-alt-propylen)-Blockcopolymere (PEO-PEP).

Die amphiphilen Blockcopolymere können insbesondere als Diblock, Triblock oder Tetrablock vorliegen. Bei Multiblocks, d.h. insbesondere bei Tri-oder Tetrablocks, können diese linear oder verzweigt, insbesondere als Sternblock (star block), vorliegen.

Die Herstellung der amphiphilen Blockcopolymere ist dem Fachmann beispielsweise aus Macromolecules 1996, 29, 6994 - 7002 und Macromolecules 2000, 33, 9522-9534 und J. Polym. Sci. Part B: Polym. Phys. 2007, 45, 3338-3348, deren Offenbarung hiermit über Bezugnahme durch Referenz mit eingeschlossen wird, bekannt. Das amphiphile Blockcopolymer weist mindestens eine Hydroxylgruppe auf. Je nach Herstellverfahren kann das amphiphile Blockcopolymer eine oder mehrere Hydroxylgruppen aufweisen.

Wird beispielsweise bei der Polymerisierung von Alkylenoxiden mit Methanol gestartet und mit Säure abgebrochen, entsteht ein amphiphiles Blockcopolymer mit einer Hydroxylgruppe.

Wird hingegen mit einem Diol, z.B. Ethylenglycol, gestartet, entsteht entsprechend ein amphiphiles Blockcopolymer mit zwei Hydroxylgruppen.

Werden Alkohole mit drei, vier bzw. noch mehr Hydroxylgruppen als Starter verwendet, entstehen dementsprechend amphiphiles Blockcopolymere mit drei, vier bzw. noch mehr Hydroxylgruppen.

Die Herstellung kann beispielsweise in einem sequentiellen Syntheseprozess erfolgen, in welchem zuerst das erste Monomer, z.B. Butylenoxid, unter Mithilfe eines Starters polymerisiert wird, gefolgt von der Zugabe des zweiten Monomers, z.B. Ethylenoxid, welches an das Ende des entstandenen Polymerisat des ersten Monomers anpolymerisiert wird. So kann beispielsweise unter Verwendung von einem Monol als Starter ein amphiphiles Diblockcopolymer Poly(ethylenoxid)-b-Poly(butylenoxid) (PEO-PBO) hergestellt werden. Unter Verwendung eines Diols entsteht so beispielsweise ein amphiphiles Triblockcopolymer Poly(ethylenoxid)-b-Poly(butylenoxid)-Poly(ethylenoxid) (PEO-PBO-PEO). Es kann aber auch zuerst ein erstes Monomer, z.B. Butylenoxid, unter Mithilfe eines Starters polymerisiert werden, gefolgt von der Zugabe einer Mischung von zwei oder mehreren Monomeren, z.B. eine Mischung von Ethylenoxid und Butlyenoxid, welches an das Ende des entstandenen Polymerisat des ersten Monomers anpolymerisiert werden. So kann beispielsweise ein amphiphiles Blockcopolymer Poly(ethylenoxid/butylenoxid)-Poly(butylenoxid)-Poly(ethylenoxid/butylenoxid) (PEO/BO-PBO-PEO/BO) hergestellt werden.

Der Carbonsäuregruppe(n) aufweisende Schlagzähigkeitsmodifikator wird aus der Reaktion von mindestens einem amphiphilen Blockcopolymer, welches mindestens eine Hydroxylgruppe aufweist, mit einem intramolekularen Anhydrids einer Di- oder Tricarbonsäure hergestellt.

Ein intramolekulares Anhydrids einer Di- oder Tricarbonsäure lässt sich typischerweise aus der entsprechenden Di- oder Tricarbonsäure durch Wasserentzug unter Ringschluss bilden. Hierbei bildet sich intramolekular eine Anhydridgruppe. Derartige intramolekulare Anhydride einer Di- oder Tricarbonsäure zeichnen sich dadurch aus, dass die Anhydridgruppe Teil eines Ringes ist.

Besonders geeignete intramolekularen Anhydride einer Di- oder Tricarbonsäure sind insbesondere jene, welche ausgewählt sind aus der Gruppe bestehend aus Maleinsäureanhydrid, 2-Methyl-Maleinsäureanhydrid, 2,2-Di-methylmaleinsäureanhydrid,2,3-Dimethyl-Maleinsäureanhydrid, Malonsäureanhydrid, 2-Methyl-Malonsäureanhydrid, 2,2-Dimethyl-Malonsäureanhydrid, Bernsteinsäureanhydrid, Glutarsäureanhydrid, Adipinsäureanhydrid, Pimelinsäureanhydrid, Itaconsäureanhydrid, Diglycolsäureanhydrid, (2-Dodecen-1-yl)bernsteinsäureanhydrid, Methyl-norbornen-2,3-dicarbonsäureanhydrid (=Methyl-Nadic-Anhydrid), Phthalsäureanhydrid, 3,4,5,6-Tetrahydrophthalsäureanhydrid, Hexahydrophthalsäureanhydrid, Homophthalsäureanhydrid und Trimellitsäureanhydrid.

Bevorzugt sind jene intramolekularen Anhydride einer Di- oder Tricarbonsäure, bei welchen sich beim Ringschluss bei der Anhydridbildung einen Fünfer- oder Sechser-Ring bildet. Somit weisen bevorzugte Anhydride einer Di-oder Tricarbonsäure folgende Strukturen auf:

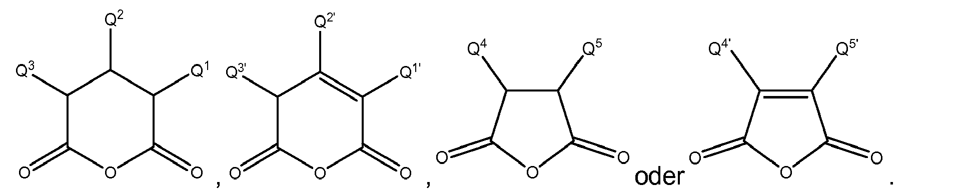

Hierbei stehen die Substituenten Q¹, Q², Q³, Q^{1'}, Q^{2'}, Q^{3'}, Q⁴, Q⁵, Q^{4'} und Q^{5'} je für H oder für einen einwertigen organischen Rest oder bilden untereinander einen zwei- oder dreiwertigen organischen Rest.

Für die Reaktion des amphiphilen Blockcopolymers, welches mindestens eine Hydroxylgruppe aufweist, mit dem intramolekularen Anhydrid einer Di- oder Tricarbonsäure werden das intramolekularen Anhydrid einer Di-oder Tricarbonsäure und das amphiphile Blockcopolymer, welches mindestens eine Hydroxylgruppe aufweist, vorzugsweise in einem solchen Verhältnis zueinander eingesetzt, dass das Verhältnis der Anhydridgruppen des Anhydrids einer Di- oder Tricarbonsäure zu Hydroxylgruppen des amphiphilen Blockcopolymers, welches mindestens eine Hydroxylgruppe aufweist, mindestens 1 ist.

Bei dieser Reaktion reagiert die Hydroxylgruppe(n) des amphiphilen Blockcopolymers mit der Anhydridgruppe des Anhydrids einer Di- oder Tricarbonsäure unter Bildung von Estergruppe(n) und Carbonsäuregruppe(n).

Zur Erhöhung der Verständlichkeit sei hier die Herstellung eines Beispiels eines Carbonsäuregruppen aufweisenden Schlagzähigkeitsmodifikatoren an Hand des folgenden Beispiels schematisch dargestellt:

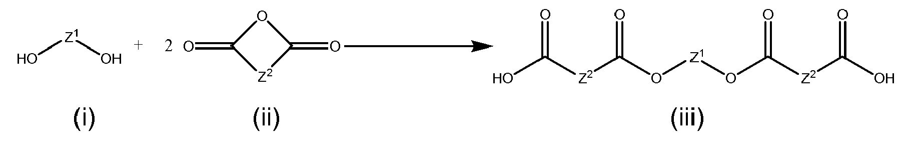

Hierbei stehen Z¹ für den Rest eines amphiphilen Blockcopolymers mit zwei Hydroxylgruppen nach Entfernung der zwei Hydroxylgruppen und Z² für den Rest eines Anhydrids nach Entfernung der Anhydridgruppe. Durch die Reaktion des amphiphilen Blockcopolymers mit Hydroxylgruppen der Formel (i) mit dem intramolekularen Carbonsäureanhydrids der Formel (ii) wird hier der beispielhafte Carbonsäuregruppen aufweisenden Schlagzähigkeitsmodifikator der Formel (iii) gebildet.

Diese Reaktion erfolgt in hoher Ausbeute und unter milden Bedingungen. Diese Bedingungen und die Reaktionsführung sind dem Fachmann grundsätzlich bekannt.

Die Carbonsäuregruppe(n) aufweisenden Schlagzähigkeitsmodifikatoren sind typischerweise bei Raumtemperatur flüssig oder zumindest fliessfähig.

Die Carbonsäuregruppe(n) aufweisenden Schlagzähigkeitsmodifikatoren können breit verwendet werden. Da sie beim Zusatz zu einer Kunststoffmatrix, insbesondere einer Epoxidharzmatrix, eine deutliche Zunahme der Zähigkeit der ausgehärteten Matrix bewirken, sind sie selber als Schlagzähigkeitsmodifikatoren geeignet. Sie können jedoch auch als Ausgangsprodukte zur Synthese von Derivaten dienen.

Besonders geeignete derartige Derivate sind deren Umsetzungsprodukte mit Polyepoxiden.

Somit stellen Schlagzähigkeitsmodifikatoren, welche aus der Reaktion eines derartigen, vorgängig beschriebenen Carbonsäuregruppe(n) aufweisenden Schlagzähigkeitsmodifikators mit mindestens einem Polyepoxid hergestellt werden, einen weiteren Aspekt der vorliegenden Erfindung dar.

Das Polyepoxid stellt hierbei vorzugsweise ein Diepoxid, insbesondere einen Diglycidylether, dar.

Als Polyepoxid sind einerseits vor allem sogenannte Epoxid-Reaktivverdünner geeignet. Als derartige Reaktivverdünner gelten besonders die im Weiteren detailliert als Reaktivverdünner **G** aufgeführten Polyepoxide.

Als Polyepoxid sind anderseits vor allem die im Weiteren detailliert als Epoxidharz **A** aufgeführten Polyepoxide zu betrachten.

Besonders bevorzugt ist das Polyepoxid ein Diglycidylether eines Bisphenols. Meist bevorzugt ist das Polyepoxid ein Diglycidylether von Bisphenol-A.

In einer Ausführungsform wird der Carbonsäuregruppe(n) aufweisende Schlagzähigkeitsmodifikator und das Polyepoxid für die Reaktion miteinander in einem solchen Verhältnis zueinander eingesetzt, dass das Verhältnis der Carbonsäuregruppen des Carbonsäuregruppe(n) aufweisenden Schlagzähigkeitsmodifikators zu den Epoxidgruppen des Polyepoxids grösser als 1 ist.

In diesem Fall werden Carbonsäuregruppen-aufweisende Schlagzähigkeitsmodifikatoren erhalten.

Zur Erhöhung der Verständlichkeit sei hier das vorgängig erwähnte Beispiel wieder aufgenommen. Aus der Umsetzung des beispielhaften Carbonsäuregruppen aufweisenden Schlagzähigkeitsmodifikators der Formel (iii) wird im Überschuss eines beispielhaften Polyepoxids der Formel (iv) zum beispielhaften Carbonsäuregruppen-aufweisenden Schlagzähigkeitsmodifikator der Formel (v) umgesetzt:

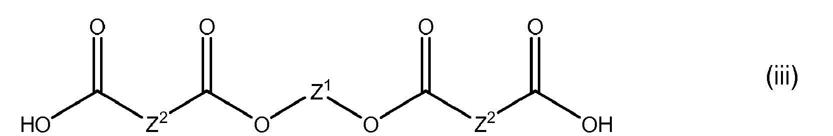

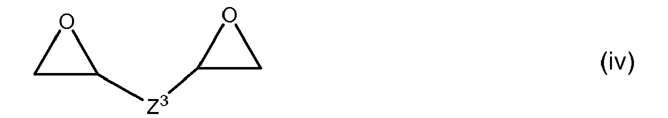

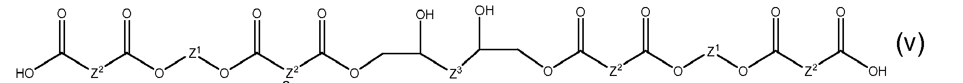

Hierbei steht Z³ für den Rest eines Diepoxids nach Entfernung der zwei Epoxidgruppen.

In einer weiteren, besonders bevorzugten, Ausführungsform wird der Carbonsäuregruppe(n) aufweisende Schlagzähigkeitsmodifikator und das Polyepoxid für die Reaktion miteinander in einem solchen Verhältnis zueinander eingesetzt, dass das Verhältnis der Carbonsäuregruppen des Carbonsäuregruppe(n) aufweisenden Schlagzähigkeitsmodifikators zu den Epoxidgruppen des Polyepoxids kleiner als 1 ist.

In diesem Fall werden Epoxidgruppen-aufweisende Schlagzähigkeitsmodifikatoren erhalten.

Zur Erhöhung der Verständlichkeit sei auch hier das vorgängig erwähnte Beispiel wieder aufgenommen. Aus der Umsetzung des beispielhaften Carbonsäuregruppen aufweisenden Schlagzähigkeitsmodifikator der Formel (iii) wird im Unterschuss eines beispielhaften Polyepoxids der Formel (iv) zum beispielhaften Epoxid-aufweisenden Schlagzähigkeitsmodifikator der Formel (vi) umgesetzt:

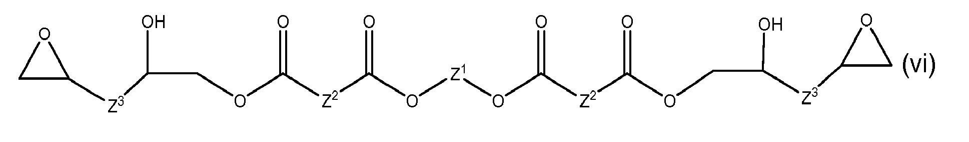

In beiden Ausführungsformen werden Polyepoxidgruppen mit Carbonsäuregruppen umgesetzt. Der Fachmann kennt bestens die Bedingungen, insbesondere Temperaturen und Katalysatoren, für eine derartige Umsetzung.

Die so hergestellten Carbonsäuregruppen-aufweisenden Schlagzähigkeitsmodifikatoren, bzw. Epoxidgruppen-aufweisenden Schlagzähigkeitsmodifikatoren, sind typischerweise bei Raumtemperatur flüssig oder zumindest fliessfähig.

Es ist dem Fachmann auch klar, dass die so hergestellten Carbonsäuregruppen-aufweisenden Schlagzähigkeitsmodifikatoren, bzw. Epoxidgruppen-aufweisenden Schlagzähigkeitsmodifikatoren, ihrerseits wieder Ausgangsprodukte für weitergehende Umsetzungen, insbesondere mit Polyepoxiden, Polyaminen, Polyolen oder Polyisocyanaten dienen können.

Die beschriebenen Carbonsäuregruppe(n)- bzw. Epoxidgruppen-aufweisenden Schlagzähigkeitsmodifikatoren bewirken beim Zusatz zu einer Kunststoffmatrix, insbesondere einer Epoxidharzmatrix, eine deutliche Zunahme der Zähigkeit der ausgehärteten und sind deshalb als Schlagzähigkeitsmodifikatoren bestens geeignet.

Sie können insbesondere Bestandteil von ein- oder zweikomponentigen Klebstoffen, Dichtstoffen, Beschichtungen und Belägen, insbesondere Bodenbeläge, sein. Bevorzugt stellen solche Systeme EpoxidharzZusammensetzungen dar.

In einem weiteren Aspekt betrifft die vorliegende Erfindung eine einkomponentige hitzehärtende Epoxidharzzusammensetzung, welche
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens einen vorgängig beschriebenen Schlagzähigkeitsmodifikator; enthält.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

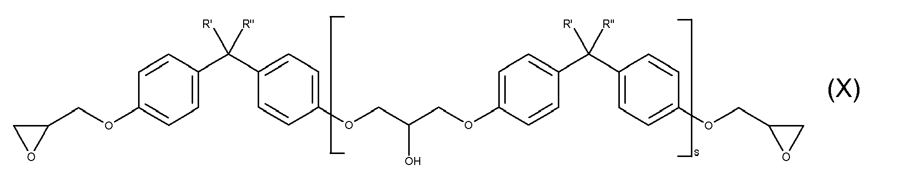

Hierbei stehen die Substituenten R' und R" unabhängig voneinander entweder für H oder CH₃- Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (XI) auf

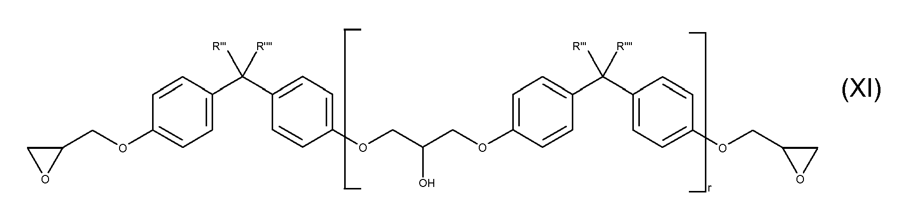

Hierbei stehen die Substituenten R"' und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Novolake. Diese weisen insbesondere die folgende Formel auf: 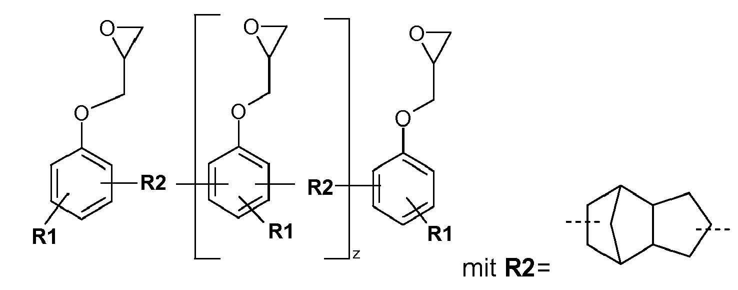 oder CH₂, **R1** = H oder Methyl und z = 0 bis 7.

Insbesondere handelt es sich hierbei um Phenol- oder Kresol-Novolake (**R2** = CH₂).

Solche Epoxidharze sind unter dem Handelsnamen EPN oder ECN sowie Tactix®556 von Huntsman oder unter der Produktereihe D.E.N.™ von Dow Chemical kommerziell erhältlich.

Bevorzugt stellt das Epoxidharz **A** ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (X).

Der Anteil von Epoxidharzes **A** beträgt vorzugsweise 10-85 Gew.-%, insbesondere 15-70 Gew.-%, bevorzugt 15-60 Gew.-%, am Gewicht der Zusammensetzung.

Es hat sich gezeigt, dass es vorteilhaft ist, mehrere erfindungsgemässe Schlagzähigkeitsmodifikatoren kombiniert einzusetzen.

Der Anteil des vorgängig beschriebenen Schlagzähigkeitsmodifikators beträgt vorzugsweise 1 - 45 Gew.-%, insbesondere 3 - 35 Gew.-%, am Gewicht der Zusammensetzung.

Die erfindungsgemässe Zusammensetzung enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron), N,N-Dimethylharnstoff, N-iso-Butyl-N',N'-dimethylharnstoff sowie Addukte von Diisocyanaten und Dialkylaminen. Beispiele für derartige Addukte von Diisocyanaten und Dialkylaminen sind 1,1'-(Hexan-1,6-diyl)bis(3,3'-dimethylharnstoff), welches einfach durch die Reaktion von Hexamethylendiisocyanat (HDI) und Dimethylamin zugänglich ist oder die analoge Harnstoffverbindung, welche bei der Addition von Isophorondiisocyanat (IPDI) an Dimethylamin entsteht. Weiterhin können Verbindungen der Klasse der Imidazole, Imidazoline und Amin-Komplexe eingesetzt werden.

Bevorzugt handelt es sich beim Härter **B** um einen Härter, welcher welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), N,N-Dimethylharnstoff, N-isoButyl-N',N'-dimethylharnstoff, 1,1'-(Hexan-1,6-diyl)bis(3,3'-dimethylharnstoff) sowie Imidazole, Imidazol-Salze, Imidazoline und Amin-Komplexe

Besonders bevorzugt als Härter **B** ist Dicyandiamid.

Vorteilhaft beträgt der Gesamtanteil des Härters **B** 1 - 10 Gewichts-%, vorzugsweise 2 - 8 Gewichts-%, bezogen auf das Gewicht der gesamten Zusammensetzung.

Die hitzehärtende Epoxidharzzusammensetzung kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenylmethylen-diisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben, dessen Inhalt hiermit durch Bezugnahme eingeschlossen wird. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels **C** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2/98 bis 50 / 50, insbesondere 5/95-25 /75.

Es hat sich weiterhin gezeigt, dass es besonders vorteilhaft ist, wenn die hitzehärtende einkomponentige Epoxidharzzusammensetzung neben dem vorgängig beschriebenen Schlagzähigkeitsmodifikator zusätzlich mindestens noch einen weiteren Schlagzähigkeitsmodifikator **D** enthält.

Die zusätzlichen Schlagzähigkeitsmodifikatoren **D** können fest oder flüssig sein.

In einer Ausführungsform ist dieser Schlagzähigkeitsmodifikatoren **D** ein Flüssigkautschuk **D1,** welcher ein carboxyl- oder epoxidterminiertes Acrylnitril/Butadien-Copolymer oder ein Derivat davon ist. Derartige Flüssigkautschuke sind beispielsweise unter dem unter dem Namen Hypro™(früher Hycar®) CTBN und CTBNX und ETBN von Nanoresins AG, Deutschland, bzw. Emerald Performance Materials LLC) kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer weiteren Ausführungsform ist der Schlagzähigkeitsmodifikator **D** ein Polyacrylatflüssigkautschuk **D2,** der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.

In einer weiteren Ausführungsform ist der Schlagzähigkeitsmodifikator **D** ein fester Schlagzähigkeitsmodifikator, welcher ein organisches lonengetauschtes Schichtmineral **DE1** ist.

Das lonen-getauschte Schichtmineral **DE1** kann entweder ein Kationen-getauschtes Schichtmineral **DE1c** oder ein Anionen-getauschtes Schichtmineral **DE1a** sein.

Das Kationen-getauschte Schichtmineral **DE1c** wird hierbei erhalten aus einem Schichtmineral **DE1',** bei welchem zumindest ein Teil der Kationen durch organische Kationen ausgetauscht worden sind. Beispiele für derartige Kationen-getauschte Schichtmineralien **DE1c** sind insbesondere diejenigen, welche in US 5,707,439 oder in US 6,197,849 erwähnt sind. Ebenso ist dort das Verfahren zur Herstellung dieser Kationen-getauschten Schichtminerale **DE1c** beschrieben. Bevorzugt als Schichtmineral **DE1'** ist ein Schichtsilikat. Insbesondere bevorzugt handelt es sich beim Schichtmineral **DE1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **DE1'** wie Kaolinit oder ein Montmorillionit oder ein Hectorit oder ein Illit gezeigt.

Zumindest ein Teil der Kationen des Schichtminerals **DE1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol, Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale **DE1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garmite® (Rockwood) erhältlich.

Das Anionen-getauschte Schichtmineral **DE1a** wird hierbei erhalten aus einem Schichtmineral **DE1",** bei welchem zumindest ein Teil der Anionen durch organische Anionen ausgetauscht worden sind. Ein Beispiel für ein derartig Anionen-getauschtes Schichtmineral **DE1a** ist ein Hydrotalcit **DE1",** bei dem zumindest ein Teil der Carbonat-Anionen der Zwischenschichten durch organische Anionen ausgetauscht wurden.

Es ist durchaus auch möglich, dass die Zusammensetzung gleichzeitig ein Kationen-getauschtes Schichtmineral **DE1c** und ein Anionen-getauschtes Schichtmineral **DE1a** enthält.

In einer weiteren Ausführungsform ist der Schlagzähigkeitsmodifikator **D** ein fester Schlagzähigkeitsmodifikator, welcher ein Blockcopolymer **DE2** ist. Das Blockcopolymer **DE2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere **DE2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Schlagzähigkeitsmodifikator **D** ein Core-Shell Polymer **DE3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur™ von Nanoresins AG, Deutschland, angeboten.

Ebenso geeignet sind nanoskalige Silikate in Epoxid-Matrix, wie sie unter dem Handelsnamen Nonopox von Nanoresins AG, Deutschland, angeboten werden.

In einer weiteren Ausführungsform ist der Schlagzähigkeitsmodifikator **D** ein Umsetzungsprodukt **DE4** eines carboxylierten festen Nitrilkautschuks mit überschüssigem Epoxidharz.

In einer weiteren Ausführungsform ist der Zähigkeitsverbesserer **D** ein blockiertes Polyurethanpolymer der Formel (IV).

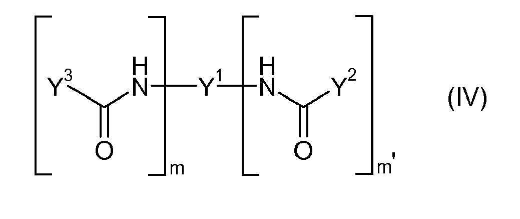

Hierbei stehen m und m' je für Werte zwischen 0 und 8, mit der Massgabe, dass m + m' für einen Wert von 1 bis 8 steht.

Bevorzugt ist m verschieden von 0.

Weiterhin steht Y¹ für ein mit m+m' Isocyanatgruppen terminiertes lineares oder verzweigtes Polyurethanpolymer **PU1** nach dem Entfernen aller endständigen Isocyanatgruppen.

Y² steht unabhängig von einander für eine Blockierungsgruppe, welche sich bei einer Temperatur über 100°C abspaltet.

Y³ steht unabhängig von einander für eine Gruppe der Formel (IV').

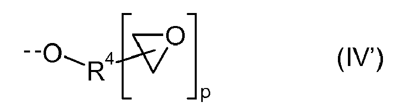

Hierbei steht R⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid-und Epoxidgruppen und p steht für die Werte 1, 2 oder 3.

Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Y² steht insbesondere unabhängig voneinander für einen Substituenten, welcher ausgewählt ist aus der Gruppe bestehend aus

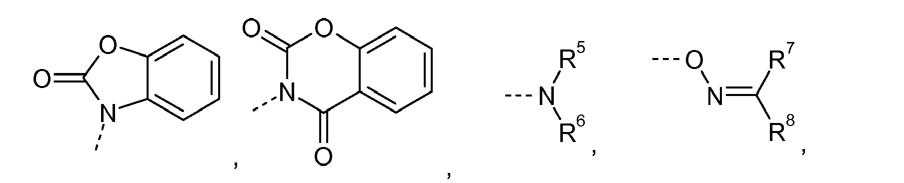

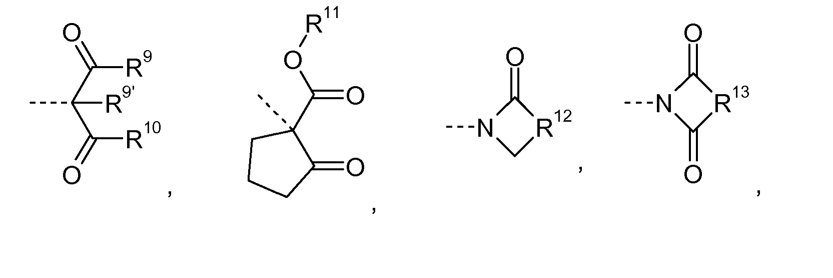

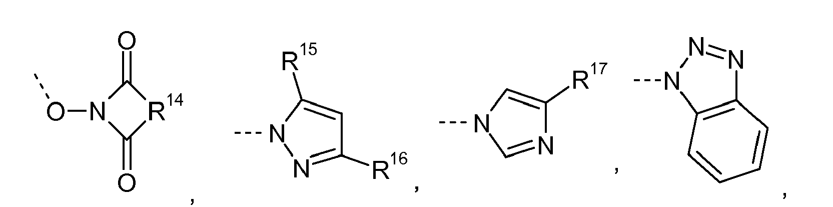

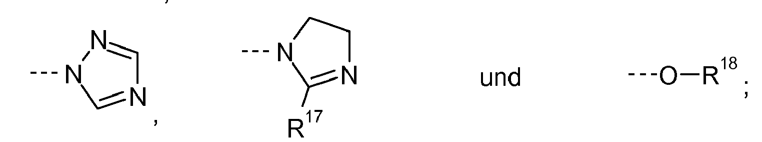

Hierbei stehen R⁵, R⁶, R⁷ und R⁸ je unabhängig voneinander für eine Alkyl- oder Cycloalkyl- oder Aralkyl- oder Arylalkyl-Gruppe oder aber R⁵ bildet zusammen mit R⁶, oder R⁷ zusammen mit R⁸, einen Teil eines 4- bis 7-gliedrigen Rings, welcher allenfalls substituiert ist.

Weiterhin steht R⁹, R^{9'} und R¹⁰ je unabhängig voneinander für eine Alkyl- oder Aralkyl- oder Arylalkyl-Gruppe oder für eine Alkyloxy- oder Aryloxy-oder Aralkyloxy-Gruppe und R¹¹ für eine Alkylgruppe.

R¹² , R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R¹⁵, R¹⁶ und R¹⁷ stehen je unabhängig voneinander für H oder für eine Alkylgruppe oder für eine Arylgruppe oder eine Aralkylgruppe.

Schliesslich steht R¹⁸ für eine Aralkylgruppe oder für eine ein- oder mehrkernige substituierte oder unsubstituierte Aromatengruppe, welche gegebenenfalls aromatische Hydroxylgruppen aufweist.

Die gestrichelten Linien in den Formeln dieses Dokumentes stellen jeweils die Bindung zwischen dem jeweiligen Substituenten und dem dazugehörigen Molekülrest dar.

Als R¹⁸ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-ÖI)), Nonylphenol, mit Styrol oder Dicyclopentadien umgesetzte Phenole, Bis-Phenol-A, Bis-Phenol-F und 2,2'-Diallyl-bisphenol-A.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Besonders bevorzugte Reste Y² sind Reste, welche ausgewählt sind aus der Gruppe bestehend aus

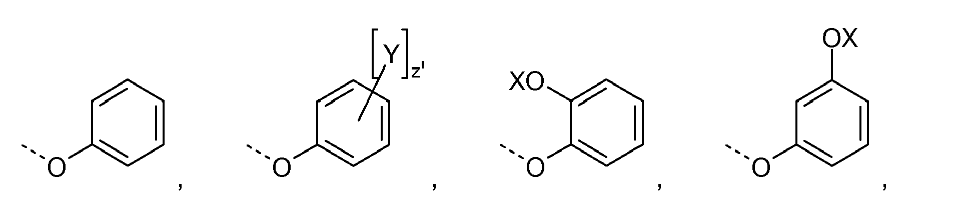

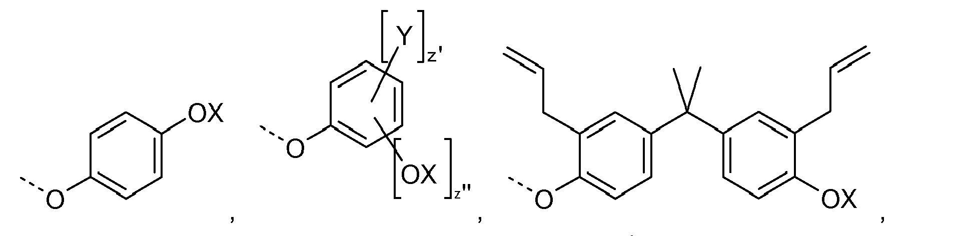

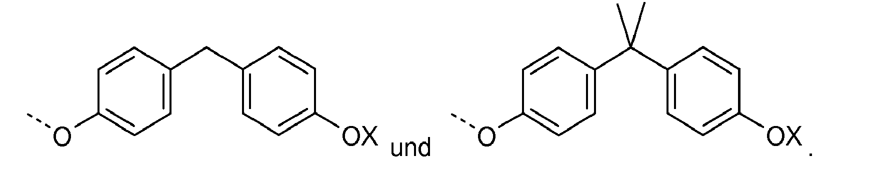

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Der Rest X steht für H oder für einen Alkyl-, Aryl-, Aralkylgruppe, insbesondere für H oder Methyl.

Die Indices z' und z" stehen für die Werte 0, 1, 2, 3, 4 oder 5, mit der Massgabe, dass die Summe z' + z" für einen Wert zwischen 1 und 5 steht.

Die Herstellung des blockierten Polyurethanpolymers der Formel (IV) erfolgt aus dem Isocyanatgruppen terminierten linearen oder verzweigten Polyurethanpolymeren **PU1** mit einer oder mehreren Isocyanat-reaktiven Verbindungen Y²H und oder Y³H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt derart, dass die eine oder die mehreren Isocyanat-reaktiven Verbindungen Y²H und/oder Y³H stöchiometrisch oder im stöchiometrischen Überschuss eingesetzt werden, um zu gewährleisten, dass alle NCO-Gruppen umgesetzt sind.

Die Isocyanat-reaktive Verbindung Y³H ist eine Monohydroxyl-Epoxidverbindung der Formel (IVa).

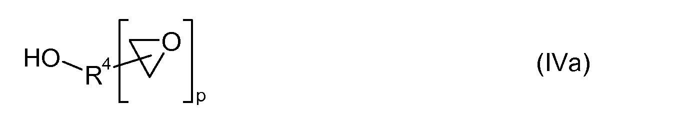

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (IVa) weist 1, 2 oder 3 Epoxidgruppen auf. Die Hydroxylgruppe dieser Monohydroxyl-Epoxidverbindung (IVa) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IVb), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IVb), die bei der Reaktion von Bisphenol-F (R = H) oder des Gemisches von Bisphenol-A und Bisphenol-F mit Epichlorhydrin gebildet werden.

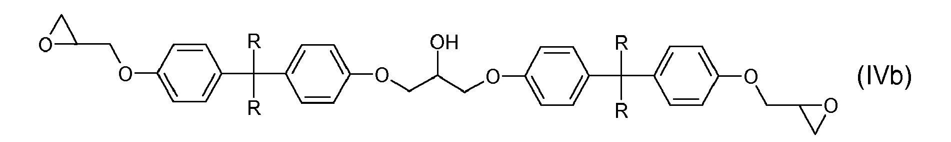

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R⁴ ist insbesondere bevorzugt ein dreiwertiger Rest der Formel 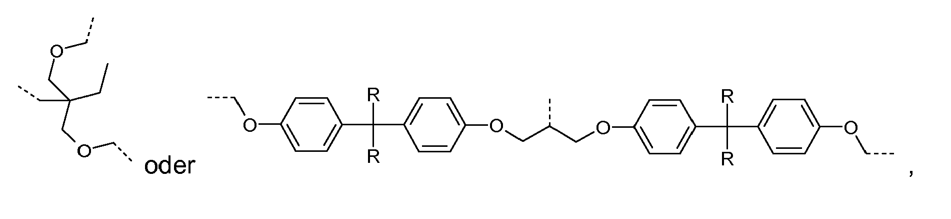 wobei R für Methyl oder H steht.

Die freie primäre oder sekundäre OH-Funktionalität der Monohydroxyl-Epoxidverbindung der Formel (IVa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem Y¹ basiert, lässt sich aus mindestens einem Diisocyanat oder Triisocyanat sowie aus mindestens einem Polymeren **Q_{PM}** mit endständigen Amino-, Thiol- oder Hydroxylgruppen und /oder aus einem, gegebenenfalls substituierten, Polyphenol **Q_{PP}** herstellen.

Geeignete Diisocyanate sind beispielsweise aliphatische, cycloaliphatische, aromatische oder araliphatische Diisocyanate, insbesondere handelsübliche Produkte wie Methylendiphenyldiisocyanat (MDI), 1,4-Butandiisocyanat, Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI) oder m-Tetramethylxylylen diisocyanat (TMXDI) sowie deren Dimere. Bevorzugt sind HDI, IPDI, MDI oder TDI.

Geeignete Triisocyanate sind beispielsweise Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere Polymere **Q_{PM}** mit zwei oder drei endständigen Amino-, Thiol- oder Hydroxylgruppen geeignet.

Als derartige geeignete Polymere **Q_{PM}** gelten insbesondere diejenigen, wie sie beispielsweise in WO 2008/049857 A1, insbesondere als **Q_{PM}** auf Seite 7, Zeile 25 bis Seite 11, Zeile 20, deren Inhalt hiermit insbesondere durch Bezugnahme eingeschlossen wird, offenbart sind.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** eignen sich insbesondere Polyoxyalkylenpolyole, auch Polyetherpolyole genannt, Hydroxyterminierte Polybutadienpolyole, Styrol-Acrylnitril gepfropfte Polyetherpolyole, Polyhydroxyterminierte Acrylnitril/Butadien-Copolymere, Polyesterpolyole sowie Polycarbonatpolyole.

Weiterhin besonders geeignet als Polymere **Q_{PM}** haben sich die für die Herstellung der vorgängig beschriebenen Carbonsäuregruppe(n) aufwiesenden Schlagzähigkeitsmodifikatoren verwendeten amphiphilen Blockcopolymere, welche mindestens eine Hydroxylgruppe aufweisen, insbesondere solche, wie sie unter dem Handelsnamen Fortegra™ , insbesondere Fortegra™ 100, von Dow Chemical, vertrieben werden, erwiesen.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol-oder Kresolnovolacke mit -OH-Funktionalität von 2.0 bis 3.5 sowie alle Isomeren der vorgenannten Verbindungen.

Besonders geeignet als in der Zusammensetzung gegebenenfalls vorhandenem Schlagzähigkeitsmodifikator **D** sind jene, wie sie in den folgenden Artikel bzw. Patentschriften, deren Inhalt hiermit durch Referenz mit eingeschlossen wird, offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylatterminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11, Zeile 20; EP 1 728 825 A1, insbesondere Formel (I), besonders Seite 3, Zeile 21 bis Seite 4, Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die amphiphilen Blockcopolymere, besonders Seite 3339, 2. Spalte bis 3341 2.Spalte; WO 2004/055092 A1, insbesondere Formel (I), besonders Seite 7, Zeile 28 bis Seite 13, Zeile 15. WO 2005/007720 A1, insbesondere Formel (I), besonders Seite 8, Zeile 1 bis Seite 17, Zeile 10; WO 2007/020266 A1, insbesondere Formel (I), besonders Seite 3, Zeile 1 bis Seite 11, Zeile 6, WO 2008/049857 A1, insbesondere Formel (I), besonders Seite 3, Zeile 5 bis Seite 6, Zeile 20, WO 2008/049858 A1, insbesondere Formel (I) und (II) , besonders Seite 6, Zeile 1 bis Seite 12, Zeile 15, WO 2008/049859 A1, insbesondere Formel (I), besonders Seite 6, Zeile 1 bis Seite 11, Zeile 10, WO 2008/049860 A1, insbesondere Formel (I), besonders Seite 3, Zeile 1 bis Seite 9, Zeile 6, sowie DE-A-2 123 033, US 2008/0076886 A1, WO 2008/016889 und WO 2007/025007.

Es hat sich gezeigt, dass in der Zusammensetzung vorteilhaft mehrere Schlagzähigkeitsmodifikatoren vorhanden sind, insbesondere auch mehrere Schlagzähigkeitsmodifikatoren **D**.

Der Anteil an Schlagzähigkeitsmodifikatoren **D** wird vorteilhaft in einer Menge von 1 - 45 Gew.-%, insbesondere 1 - 35 Gew.-%, bezogen auf das Gewicht der Zusammensetzung, eingesetzt.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Ein weiteres Beispiel sind funktionalisierte Alumoxane, wie z. B. in US 6,322,890 beschrieben.

Vorteilhaft beträgt der Gesamtanteil des gesamten Füllstoffs **F** 3 - 50 Gewichts-%, vorzugsweise 5-35 Gewichts-%, insbesondere 5-25 Gewichts-%, bezogen auf das Gewicht der gesamten Zusammensetzung.

In einer weiteren bevorzugten Ausführungsform enthält die Zusammensetzung ein physikalisches oder chemisches Treibmittel, wie es beispielsweise unter dem Handelsnamen Expancel™ der Firma Akzo Nobel oder Celogen™ der Firma Chemtura erhältlich ist.Der Anteil des Treibmittels beträgt vorteilhaft 0.1-3 Gew.-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner G. Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Die beschriebenen hitzehärtenden Epoxidharzzusammensetzungen zeichnen sich nach Aushärtung durch eine hohe Schlagzähigkeit sowie eine Glasübergangstemperatur von mehr als 100°C, insbesondere von mehr als 120°C, bisweilen sogar von mehr als 130°C, aus.

Es hat sich gezeigt, dass sich die beschriebenen hitzehärtenden Epoxidharzzusammensetzungen besonders als einkomponentige Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit sowohl hoher als auch tiefer Einsatztemperatur zu erreichen.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Ein weiterer Aspekt der vorliegenden Erfindung betrifft ein Verfahren zur Verklebung von hitzestabilen Substraten, welches die Schritte umfasst:
α) Applizieren einer einkomponentigen hitzehärtenden Epoxidharzzusammensetzung, wie sie vorgängig im Detail beschrieben wurde, auf die Oberfläche eines hitzestabilen Substrates **S1,** insbesondere eines Metalls;
β) Kontaktieren der applizierten hitzehärtenden Epoxidharzzusammensetzung mit der Oberfläche eines weiteren hitzestabilen Substrates S2, insbesondere eines Metalls;
γ) Erhitzen des Epoxidharzzusammensetzung auf eine Temperatur von 100 bis 130 °C, bevorzugt von 115 bis 125°C;
δ) In Kontaktbringen der Substrate **S1** und **S2** und der damit in Kontakt stehenden hitzehärtenden Epoxidharzzusammensetzung mit einer Waschflüssigkeit bei einer Temperatur zwischen 20 und 100°C, insbesondere zwischen 40 und 70°C; bevorzugt zwischen 50 und 70°C;
ε) Erhitzen der Zusammensetzung auf eine Temperatur von 140 - 220 °C, insbesondere von 140 - 200°C, bevorzugt zwischen 160 und 190°C.

Das Substrat **S2** besteht hierbei aus dem gleichen oder einem unterschiedlichen Material wie das Substrat **S1.**

Aus einem derartigen Verfahren zum Verkleben von hitzestabilen Materialien resultiert ein verklebter Artikel. Ein derartiger Artikel ist vorzugsweise ein Fahrzeug oder ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender Rohbauklebstoff im Fahrzeugbau.

Ein weiterer Aspekt der vorliegenden Erfindung betrifft Verwendung eines mindestens eine Hydroxylgruppe aufweisenden amphiphilen Blockcopolymeren zum Herstellen von Carbonsäuregruppe(n) aufweisenden Schlagzähigkeitsmodifikatoren, insbesondere wie sie vorgängig beschrieben sind.

### Beispiele

### Herstellung Carbonsäuregruppen aufweisender Schlagzähigkeitsmodifikator CGAS

110.0 g Fortegra™ 100 (OH-Zahl: 16 mg/g KOH) und 4.74 g Phthalsäureanhydrid (Fluka) wurden bei 140°C während 2 Stunden unter Stickstoff und während 2 weiteren Stunden unter Vakuum gerührt. Es wurde ein viskoses Carbonsäuregruppen aufweisendes Polymer ***CGAS*** mit einer Säurezahl von 15.5 mg/g KOH (theor. 15.7 mg/g KOH) erhalten.

### Herstellung Epoxidgruppen aufweisender Schlagzähigkeitsmodifikator EGAS

Der wie oben beschriebene hergestellte Carbonsäuregruppen aufweisender Schlagzähigkeitsmodifikator ***CGAS*** wurde weiter umgesetzt, indem hierzu 165 g Epoxidharz D.E.R. 331 (Dow) und 0.55 Triphenylphosphin zugefügt wurde und die Mischung während 3 Stunden bei 120°C unter Vakuum gerührt wurde. Es wurde ein viskoses Epoxidgruppen aufweisendes Polymer ***EGAS*** mit einem Epoxidgehalt von 3.14 eq/kg (theor. 3.15 eq/kg) erhalten.

### Herstellung Schlagzähigkeitsmodifikator SM1

150 g Poly-THF®2000 (OH-Zahl 57 mg/g KOH, BASF) und 150 g Liquiflex H (OH-Zahl 46 mg/g KOH, Krahn) wurden 30 Minuten unter Vakuum bei 105°C getrocknet. Nachdem die Temperatur auf 90°C reduziert worden war, wurden 64.0 g Isophorondiisocyanat und 0.13 g Dibutylzinndilaurat zugegeben. Die Reaktion wurde unter Vakuum bei 90°C bis zur Konstanz des NCO-Gehaltes bei 3.30% nach 2.5 h geführt (berechneter NCO-Gehalt: 3.38%). Anschliessend wurden 103.0 g Cardolite® NC-700 (Cardanol, Cardolite) als Blockierungsmittel zugegeben. Es wurde bei 105°C unter Vakuum weitergerührt, bis der NCO-Gehalt nach 3.5h unter 0.1 % gesunken war.

### Herstellung Schlagzähigkeitsmodifikator SM2

90 g Hypro™ CTBN 1300X13 (Säure-Zahl ca. 29 mg/g KOH, Nanoresins), 60 g Hypro™ CTBN 1300X8 (Säure-Zahl ca. 32 mg/g KOH, Nanoresins) und 23.2 g Araldite® GT7071 (Epoxidequivalentgewicht ca. 510 g/eq, Huntsman) wurden zusammen mit 0.75 g Triphenylphosphin und 0.38 g Butylhydroxytoluol (BHT) während 2 Stunden unter Vakuum bei 140°C gerührt. Anschliessend wurden 201.8 g D.E.R. 354 (Dow) zugegeben und es wurde während 2h bei 140°C unter Vakuum weiter gerührt. Es wurde ein viskoses Harz mit einem Epoxidgehalt von ca. 2.8 eq/kg erhalten.

### Herstellung Schlagzähigkeitsmodifikator SM3

318.0 g Jeffamine® T-3000 (Huntsman) und 30.4 g Maleinsäureanhydrid (Fluka) wurden während 2 h unter Stickstoff bei 120°C gerührt. Anschliessend wurden 802 g D.E.R. 331 (Dow) sowie 2.9 g Triphenylphosphin zugegeben und es wurde bei 110°C unter Vakuum weiter gerührt, bis ein konstanter Epoxid-Gehalt erreicht war. Nach ca. 2h wurde so ein viskoses Harz mit einem Epoxid-Gehalt von ca. 3.5 eq/kg erhalten.

### Herstellung Schlagzähigkeitsmodifikator SM4

200.0 g (ca. 0.4 eq Epoxidgruppen) D.E.R. 671 (Dow) und 75.0 g (ca. 0.4 eq Epoxidgruppen) D.E.R. 331 (Dow) wurden während 15 Minuten bei 120°C unter Vakuum gerührt, bis eine homogene Lösung entstanden war. Anschliessend wurden 230.0 g (ca. 0.23 eq NH) Jeffamine® D-4000 (Huntsman) sowie 0.5 g (ca. 0.007 eq NH) Jeffamine® T-403 (Huntsman) zugegeben. Nach 3h Rühren unter Vakuum bei 120°C sowie 1h bei 130°C wurde ein klares, viskoses Harz mit einem berechneten Epoxid-Gehalt von ca. 1.13 eq/kg (Epoxidequivalentgewicht = ca. 890 g/eq) erhalten.

### Herstellung der Zusammensetzungen

Es wurden gemäss Tabellen 1 die Referenzzusammensetzungen ***Ref.1*** bis ***Ref.4*** sowie die erfindungsgemässen Zusammensetzungen ***1*** bis ***4*** hergestellt. Die Bestandteile sind jeweils in Gewichtsteilen angegeben. Insbesondere wurde darauf geachtet, dass die Zusammensetzungen jeweils etwa dieselben Mengen an Epoxidgruppen wie das entsprechende Referenzbeispiel aufweisen. Bei den Vergleichsbeispielen, welche nicht umgesetztes amphiphiles Blockcopolymer (Fortegra™ 100) enthalten, wurde für die entsprechenden erfindungsgemässen Beispiele die Menge des jeweiligen erfindungsgemässen Schlagzähigkeitsmodifikators so ausgewählt, dass sie die gleiche Menge an amphiphilem Blockcopolymer als Ausgangsprodukt enthalten.

### Prüfmethoden:

### Zugscherfestigkeit (ZSF) (DIN EN 1465)

Die Probekörper wurden aus den beschriebenen Beispiel-Zusammensetzungen und mit elektrolytisch verzinktem DC04 Stahl (eloZn) mit dem Mass 100 x 25 x 1.5 mm bzw. 100 x 25 x 0.8 mm, hergestellt, dabei betrug die Klebfläche 25 x 10mm bei einer Schichtdicke von 0.3mm. Gehärtet wurde 30 Min. bei 180°C. Die Zuggeschwindigkeit betrug 10mm/min.

### Zugfestigkeit (ZF) (DIN EN ISO 527)

Eine Klebstoffprobe wurde zwischen zwei Teflonpapieren auf eine Schichtdicke von 2mm verpresst. Anschliessend wurde der Klebstoff während 30 Minuten bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen.

Die Zugfestigkeit wurde gemäss DIN EN ISO 527 bestimmt.

### Schlagschälarbeit (ISO 11343)

Die Probekörper wurden aus den beschriebenen Beispiel-Zusammensetzungen und mit elektrolytisch verzinktem DC04 Stahl (eloZn) mit dem Mass 90 x 20 x 0.8mm hergestellt, dabei betrug die Klebfläche 20 x 30mm bei einer Schichtdicke von 0.3mm. Gehärtet wurde 30 Min. bei 180°C. Die Messung der Schlagschälarbeit erfolgte jeweils bei Raumtemperatur und bei minus 30°C. Die Schlaggeschwindigkeit betrug 2 m/s. Als Bruchenergie (*BE*) in Joule wird die Fläche unter der Messkurve (von 25% bis 90%, gemäss ISO 11343) angegeben.

### Glasübergangstemperatur (T_{g})

Die Glasübergangstemperatur wurde mittels DSC bestimmt. Es wurde hierfür ein Gerät Mettler DSC822^{e} verwendet. 10 - 20 mg der Zusammensetzungen wurden jeweils in einen Aluminiumtiegel eingewogen. Nachdem die Probe im DSC während 30 Min. bei 175°C gehärtet worden war, wurde die Probe auf minus 20°C abgekühlt und anschliessend mit einer Heizrate von 10°C/min bis 150°C aufgeheizt. Die Glasübergangstemperatur wurde mit Hilfe der DSC-Software als Mittelwert aus der gemessenen DSC-Kurve bestimmt.

Die Ergebnisse dieser Prüfungen sind in Tabelle 2 zusammengestellt.

**Tabelle 1. Zusammensetzungen und Ergebnisse. ¹BE = Bruchenergie ²n.m.= nicht gemessen.**

| | ***Ref1*** | ***1*** | ***Ref2*** | ***2*** | ***Ref3*** | ***3*** | ***Ref4*** | ***4*** |
|---|---|---|---|---|---|---|---|---|
| D.E.R.™ 331 | 50.0 | 40.0 | 45.0 | 36.0 | 30.0 | 21.0 | 45.0 | 36.0 |
| Polypox R7 | 3.0 | 3.0 | 3.0 | 3.0 | 3.0 | 3.0 | 3.0 | 3.0 |
| ***EGAS*** | | 17.0 | | 17.0 | | 17.0 | | 17.0 |
| Fortegra™ 100 | 7.0 | | 7.0 | | 7.0 | | 7.0 | |
| ***SM1*** | 15.0 | 15.0 | | | | | | |
| ***SM2*** | | | 15.0 | 15.0 | | | 15.0 | 15.0 |
| ***SM3*** | | | | | 30.0 | 30.0 | | |
| ***SM4*** | | | | | | | 10.0 | 10.0 |
| Dicyandiamid | 4.1 | 4.1 | 4.4 | 4.4 | 4.1 | 4.1 | 4.4 | 4.4 |
| N,N-Dimethylharnstofif | 2.0 | 2.0 | 2.0 | 2.0 | 2.0 | 2.0 | 2.0 | 2.0 |
| Füllstofifgemisch | 19.0 | 19.0 | 19.0 | 19.0 | 19.0 | 19.0 | 19.0 | 19.0 |
| ZF [MPa] | 17.1 | 22.3 | 32.0 | 32.4 | 31.8 | 31.9 | n.m.² | n.m.² |
| ZSF [MPa] | 24.2 | 28.9 | 17.1 | 22.4 | 31.7 | 32.3 | 13.7 | 16.5 |
| BE¹ bei 23°C [J] | 4.9 | 8.4 | 0.2 | 0.8 | 4.2 | 7.4 | 0.3 | 1.7 |
| BE¹ bei -30°C [J] | 1.5 | 2.4 | 0.1 | 0.2 | 0.3 | 1.5 | 0.3 | 0.4 |
| T_{g} [°C] | 109 | 109 | 132 | 132 | 130 | 130 | 132 | 132 |

Es zeigt sich aus Tabelle 1, dass die Zusammensetzungen, welche den Schlagzähigkeitsmodifikator ***EGAS*** -welcher ein Beispiel für einen erfindungsgemässen Schlagzähigkeitsmodifikator darstellt- enthalten, eine Erhöhung der Schlagzähigkeit aufweisen, verglichen mit der jeweiligen Vergleichszusammensetzung, welche keinen erfindungsgemässen Schlagzähigkeitsmodifikator enthalten. Weiterhin weisen die Zusammensetzungen ***1***, ***2, 3*** und ***4*** eine höhere Zugfestigkeit und Zugscherfestigkeit auf, als die entsprechenden Vergleichsbeispiele ***Ref1, Ref2, Ref3*** und ***Ref4.***

## Patentansprüche

1. Carbonsäuregruppe(n) aufweisender Schlagzähigkeitsmodifikator, welcher aus der Reaktion eines intramolekularen Anhydrids einer Di- oder Tricarbonsäure mit mindestens einem amphiphilen Blockcopolymer, welches mindestens eine Hydroxylgruppe aufweist, hergestellt wird.

2. Carbonsäuregruppe(n) aufweisender Schlagzähigkeitsmodifikator gemäss Anspruch 1, **dadurch gekennzeichnet, dass** das mindestens eine Hydroxylgruppe aufweisende amphiphile Blockcopolymer ein Blockcopolymer aus Ethylenoxid und/oder Propylenoxid sowie mindestens einem weiteren Alkylenoxid mit mindestens 4C-Atomen, bevorzugt aus der Gruppe bestehend aus Butylenoxid, Hexylenoxid und Dodecylenoxid.

3. Carbonsäuregruppe(n) aufweisender Schlagzähigkeitsmodifikator gemäss Anspruch 1, **dadurch gekennzeichnet, dass** das mindestens eine Hydroxylgruppe aufweisende amphiphile Blockcopolymer ausgewählt ist aus der Gruppe bestehend aus Poly(isopren-block-ethylenoxid)-Blockcopolymere, Poly(ethylenpropylen-b-ethylenoxid)-Blockcopolymere, Poly(butadien-b-ethylenoxid)-Blockcopolymere, Poly(isopren-b-ethylenoxid-b-isopren)-Blockcopolymere, Poly(isopren-b-ethylenoxid-methylmethacrylat)-Blockcopolymere und Poly(ethylenoxid)-b-poly(ethylen-alt propylen)-Blockcopolymere.

4. Carbonsäuregruppe(n) aufweisender Schlagzähigkeitsmodifikator gemäss einem der vorhergehenden Ansprüche, **dadurch gekennzeichnet, dass** das intramolekularen Anhydrids einer Di- oder Tricarbonsäure ausgewählt ist aus der Gruppe bestehend aus Maleinsäureanhydrid, 2-Methyl- Maleinsäureanhydrid, 2,2-Dimethyl-Maleinsäureanhydrid, 2,3-Dimethyl-Maleinsäureanhydrid, Malonsäureanhydrid, 2-Methyl-Malonsäureanhydrid, 2,2-Dimethyl-Malonsäureanhydrid, Bernsteinsäureanhydrid, Glutarsäureanhydrid, Adipinsäureanhydrid, Pimelinsäureanhydrid, Itaconsäureanhydrid, Diglycolsäureanhydrid, 2-Dodecen-1-yl)bernsteinsäureanhydrid, Methyl-norbornen-2,3-dicarbonsäureanhydrid (Methyl-Nadic-Anhydrid), Phthalsäureanhydrid, 3,4,5,6-Tetrahydrophthalsäureanhydrid, Hexahydrophthalsäureanhydrid, Homophthalsäureanhydrid und Trimellitsäureanhydrid.

5. Carbonsäuregruppe(n) aufweisender Schlagzähigkeitsmodifikator gemäss einem der vorhergehenden Ansprüche, **dadurch gekennzeichnet, dass** das intramolekularen Anhydrids einer Di- oder Tricarbonsäure und das amphiphile Blockcopolymer, welches mindestens eine Hydroxylgruppe aufweist, für die Reaktion miteinander in einem solchen Verhältnis zueinander eingesetzt werden, dass das Verhältnis der Anhydridgruppen des Anhydrids einer Di- oder Tricarbonsäure zu Hydroxylgruppen des amphiphilen Blockcopolymers, welches mindestens eine Hydroxylgruppe aufweist mindestens 1 ist.

6. Schlagzähigkeitsmodifikator, welcher aus der Reaktion eines Carbonsäuregruppe(n) aufweisenden Schlagzähigkeitsmodifikators gemäss einem der Ansprüche 1 bis 5 mit mindestens einem Polyepoxid hergestellt wird.

7. Schlagzähigkeitsmodifikator gemäss Anspruch 6, **dadurch gekennzeichnet, dass** das Polyepoxid ein Diepoxid, insbesondere ein Diglycidylether, bevorzugt ein Diglycidylethers eines Bisphenols ist.

8. Schlagzähigkeitsmodifikator gemäss Anspruch 6 oder 7, **dadurch gekennzeichnet, dass** der Carbonsäuregruppe(n) aufweisende Schlagzähigkeitsmodifikator und das Polyepoxid für die Reaktion miteinander in einem solchen Verhältnis zueinander eingesetzt werden, dass das Verhältnis der Carbonsäuregruppen des Carbonsäuregruppe(n) aufweisenden Schlagzähigkeitsmodifikators zu den Epoxidgruppen des Polyepoxids grösser als 1 ist.

9. Schlagzähigkeitsmodifikator gemäss Anspruch 6 oder 7, **dadurch gekennzeichnet, dass** der Carbonsäuregruppe(n) aufweisende Schlagzähigkeitsmodifikator und das Polyepoxid für die Reaktion miteinander in einem solchen Verhältnis zueinander eingesetzt werden, dass das Verhältnis der Carbonsäuregruppen des Carbonsäuregruppe(n) aufweisenden Schlagzähigkeitsmodifikators zu den Epoxidgruppen des Polyepoxids kleiner als 1 ist.

10. Einkomponentige hitzehärtende Epoxidharzzusammensetzung enthaltend
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens einen Schlagzähigkeitsmodifikator gemäss einem der Ansprüche 1 - 9.

11. Einkomponentige hitzehärtende Epoxidharzzusammensetzung gemäss Anspruch 10, **dadurch gekennzeichnet, dass** der Härter **B** ein Härter ist, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazole, Imidazol-Salze, Imidazoline und Amin-Komplexe.

12. Einkomponentige hitzehärtende Epoxidharzzusammensetzung gemäss Anspruch 10 oder 11, **dadurch gekennzeichnet, dass** sie zusätzlich mindestens einen weiteren Schlagzähigkeitsmodifikator **D** enthält.

13. Verfahren zur Verklebung von hitzestabilen Substraten umfassend die Schritte
α) Applizieren einer einkomponentigen hitzehärtenden Epoxidharzzusammensetzung gemäss einem der Ansprüche 10 bis 12 auf die Oberfläche eines hitzestabilen Substrates **S1,** insbesondere eines Metalls;
β) Kontaktieren der applizierten hitzehärtenden Epoxidharzzusammensetzung mit der Oberfläche eines weiteren hitzestabilen Substrates **S2**, insbesondere eines Metalls;
γ) Erhitzen des Epoxidharzzusammensetzung auf eine Temperatur von 100 bis 130 °C, bevorzugt von 115 bis 125°C;
δ) In Kontaktbringen der Substrate **S1** und **S2** und der damit in Kontakt stehenden hitzehärtenden Epoxidharzzusammensetzung mit einer Waschflüssigkeit bei einer Temperatur zwischen 20 und 100°C, insbesondere zwischen 40 und 70°C; bevorzugt zwischen 50 und 70°C;
ε) Erhitzen der Zusammensetzung auf eine Temperatur von 140 - 220 °C, insbesondere von 140 - 200°C, bevorzugt zwischen 160 und 190°C;
wobei das Substrat **S2** aus dem gleichen oder einem unterschiedlichen Material wie das Substrat **S1** besteht.

14. Verwendung einer einkomponentigen hitzehärtenden Epoxidharzzusammensetzung gemäss einem der Ansprüche gemäss einem der Ansprüche 10 bis 12 als hitzehärtender einkomponentiger Rohbauklebstoff im Fahrzeugbau.

15. Verwendung eines mindestens eine Hydroxylgruppe aufweisenden amphiphilen Blockcopolymeren, zum Herstellen von Carbonsäuregruppe(n) aufweisenden Schlagzähigkeitsmodifikatoren, insbesondere von Carbonsäuregruppe(n) aufweisenden Schlagzähigkeitsmodifikatoren gemäss einem der Ansprüche 1 - 9.
